# EUROPEAN PATENT SPECIFICATION

(11) **EP 2 055 935 B1**
(45) Date of publication and mention of the grant of the patent: **24.11.2010**
(21) Application number: 08167637.1
(22) Date of filing: 27.10.2008
(51) Int. Cl.: F02N 11/10, F02N 11/08

(54) **Vehicle and control method therefor**
Fahrzeug und Steuerverfahren dafür
Véhicule et son procédé de commande

(30) Priority: 29.10.2007 JP 2007280356
(43) Date of publication of application: 06.05.2009
(73) Proprietor: Toyota Jidosha Kabushiki Kaisha, Toyota-shi, Aichi-ken, 471-8571 (JP)
(72) Inventor: Moriya, Kouki, Toyota-shi Aichi 471-8571 (JP); Mizutani, Koichi, Toyota-shi Aichi 471-8571 (JP); Yoshiyama, Takuya, Toyota-shi Aichi 471-8571 (JP)
(74) Representative: TBK-Patent

(56) References cited:
- DE-A1- 3 228 600
- JP-A- 2006 322 332
- US-B1- 6 526 931

## Description

### BACKGROUND OF THE INVENTION

### 1. Field of Invention

The invention relates to a vehicle, and a control method for the vehicle.

### 2. Description of Related Art

A vehicle has been proposed which carries out an idling stop operation in which when a predetermined condition for stopping an engine is satisfied, it is determined whether or not a starter relay electrification circuit of a starter motor for cranking the engine is normal, and if it is determined that the starter relay electrification circuit is normal, the engine is stopped on condition that the vehicle speed is 0 and the engine is being idled (e.g., see Japanese Patent Application Publication No. 2006-322332 (JP-A-2006-322332)).

In the above-described vehicle, however, if the condition for temporarily stopping the engine remains unsatisfied for a certain amount of time after it has been determined that the starter relay electrification circuit is normal (e.g., if the engine is not idled after it has been determined that the starter relay electrification circuit is normal), the result of the determination that the starter relay electrification circuit is normal continues to be retained, so that if an abnormality later occurs in the starter relay electrification circuit, the abnormality sometimes cannot be detected. In such a case, there can occur a situation in which the engine is stopped in a state in which the engine cannot be automatically started up.

### SUMMARY OF THE INVENTION

A vehicle and a control method therefor of the invention avoid an event in which an internal combustion engine is automatically stopped when abnormality of a cranking device that cranks an internal combustion engine has occurred but cannot be detected.

A first aspect of the invention relates to a vehicle that moves using power from an internal combustion engine. The vehicle includes: cranking means for cranking the internal combustion engine; abnormality diagnosis means for performing an abnormality diagnosis of the cranking means if a predetermined abnormality diagnosis condition, including a condition that the abnormality diagnosis of the cranking means has not been completed, is satisfied; abnormality diagnosis incompleteness determination means for determining that the abnormality diagnosis of the cranking means by the abnormality diagnosis means has not been completed even if completion of the abnormality diagnosis of the cranking means has occurred provided that a predetermined time has elapsed following the completion of the abnormality diagnosis means of the cranking means; and automatic stop/start means for automatically stopping the internal combustion engine if a predetermined automatic stop condition, including a condition that the abnormality diagnosis of the cranking means by the abnormality diagnosis means has been completed and that it has been diagnosed that the cranking means does not have abnormality, is satisfied, and for automatically starting the internal combustion engine in an automatically stopped state with the cranking means performing cranking if a predetermined automatic start condition is satisfied.

As described above, in this invention, the abnormality diagnosis of the cranking means is performed if the predetermined abnormality diagnosis condition, including the condition that the abnormality diagnosis of the cranking means has not been completed, is satisfied, and it is determined that the abnormality diagnosis of the cranking means has not been completed if the predetermined time elapses following completion of the abnormality diagnosis. Then, if the predetermined automatic stop condition, including the condition that the abnormality diagnosis of the cranking means has been completed and that it has been diagnosed that the cranking means does not have abnormality, is satisfied, the internal combustion engine is automatically stopped. The internal combustion engine in the automatically stopped state is automatically started by the cranking means performing the cranking if the predetermined automatic start condition is satisfied. Therefore, if the predetermined time elapses following completion of the abnormality diagnosis of the cranking means, it is determined that the abnormality diagnosis of the cranking means has not been completed, and the abnormality diagnosis of the cranking means is performed again. Hence, it is possible to avoid an event in which a result of the diagnosis that the cranking means does not have abnormality is retained for a relatively long time. Consequently, if abnormality occurs in the cranking means at or after the elapse of a certain amount of time following the abnormality diagnosis of the cranking means, an event in which the abnormality is not detected and the internal combustion engine is automatically stopped can be avoided.

In this vehicle, the abnormality diagnosis incompleteness determination means may determine that the abnormality diagnosis of the cranking means has not been completed also when the internal combustion engine has automatically stopped, and may also avoid determining that the abnormality diagnosis of the cranking means has not been completed despite elapse of the predetermined time following the completion of the abnormality diagnosis provided that it is determined by the abnormality diagnosis means that the cranking means has abnormality. Besides, the predetermined abnormality diagnosis condition may include a condition that a stop of the vehicle is predicted or the vehicle is in the stopped state. In the former case, the abnormality diagnosis of the cranking means can be performed at an earlier timing than in the latter case.

A second aspect of the invention relates to a control method for a vehicle that includes an internal combustion engine that outputs power for moving the vehicle, and cranking means for cranking the internal combustion engine. In this control method, (a) an abnormality diagnosis of the cranking means is performed if a predetermined abnormality diagnosis condition, including a condition that the abnormality diagnosis of the cranking means has not been completed, is satisfied, and it is determined that the abnormality diagnosis of the cranking means has not been completed if a predetermined time has elapsed following completion of the abnormality diagnosis of the cranking means, and (b) the internal combustion engine is automatically stopped if a predetermined automatic stop condition, including a condition that the abnormality diagnosis of the cranking means has been completed and that the cranking means does not have abnormality, is satisfied, and the internal combustion engine in an automatically stopped state is automatically started with the cranking means performing cranking if a predetermined automatic start condition is satisfied.

In this control method, if the predetermined abnormality diagnosis condition, including the condition that the abnormality diagnosis of the cranking means has not been completed, is satisfied, the abnormality diagnosis of the cranking means is performed, and if the predetermined time elapses following the completion of the abnormality diagnosis, it is determined that the abnormality diagnosis of the cranking means has not been completed. Then, if the automatic stop condition, including the condition that the abnormality diagnosis of the cranking means has been completed and that it has been determined that the cranking means does not have abnormality, is satisfied, the internal combustion engine is automatically stopped. Then, the internal combustion engine in the automatically stopped state is automatically started by the cranking means performing the cranking if the predetermined automatic start condition is satisfied. Therefore, if the predetermined time elapses following completion of the abnormality diagnosis of the cranking means, it is determined that the abnormality diagnosis of the cranking means has not been completed, and the abnormality diagnosis of the cranking means is performed again. Hence, it is possible to avoid an event in which a result of the diagnosis that the cranking means does not have abnormality is retained for a relatively long time. Consequently, if an abnormality occurs in the cranking means at or after the elapse of a certain amount of time following the abnormality diagnosis of the cranking means, an event in which the abnormality is not detected and the internal combustion engine is automatically stopped can be avoided.

### BRIEF DESCRIPTION OF THE DRAWINGS

The foregoing and further objects, features and advantages of the invention will become apparent from the following description of exemplary embodiments with reference to the accompanying drawings, wherein like numerals are used to represent like elements and wherein:
FIG 1 is a construction diagram showing a general construction of a motor vehicle 20 as an embodiment of the invention;
FIG. 2 is a flowchart showing an example of a starter motor abnormality diagnosis routine that is executed by an electronic control unit 40; and
FIG. 3 is a flowchart showing an example of an automatic stop/start process routine that is executed by the electronic control unit 40.

### DETAILED DESCRIPTION OF EMBODIMENTS

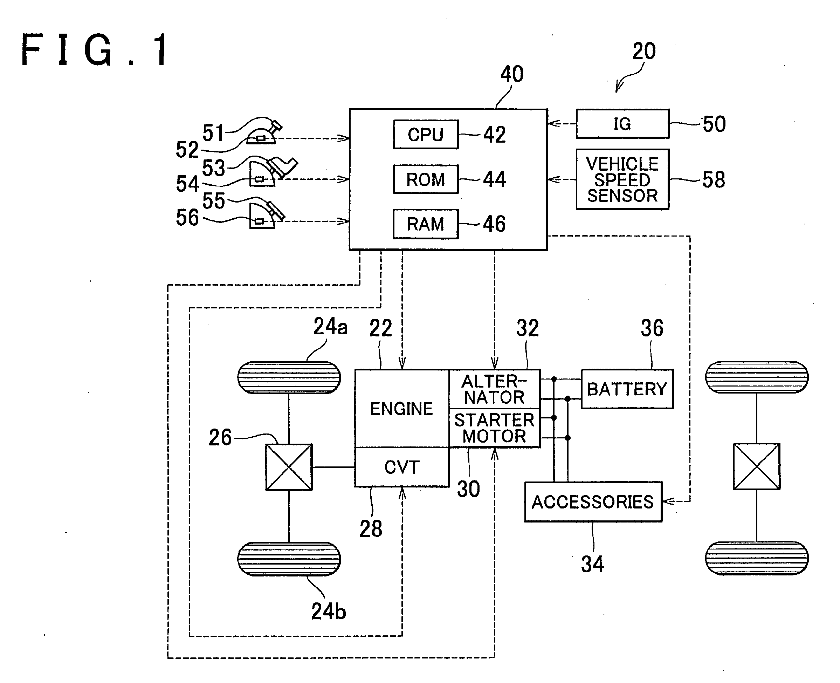

FIG 1 is a construction diagram showing a general construction of a motor vehicle 20 as embodiment of the invention. A motor vehicle 20 of the embodiment includes: an engine 22; a CVT 28 as a continuously variable transmission that shifts the speed of rotation transmitted from the engine 22 and outputs the power from the engine 22 to axle shafts of driving wheels 24a, 24b via a differential gear 26; a starter motor 30 that cranks the engine 22, an alternator 32 attached to a crankshaft of the engine 22 via a belt (not shown); a battery 36 that is charged by electric power generated by the alternator 32 and supplies electric power to the starter motor 30 and other accessories (e.g., a compressor of an air-conditioner device, or the like); and an electronic control unit 40 that controls the entire vehicle.

The electronic control unit 40 is constructed as a microprocessor having a CPU 42 as a central device. In addition to the CPU 42, the electronic control unit 40 includes a ROM 44 that stores processing programs, a RAM 46 that temporarily stores data, and input/output ports (not shown). Various signals are input to the electronic control unit 40 via the input ports, including an ignition signal from an ignition switch 50, a shift position SP from a shift position sensor 52 that detects the operation position of a shift lever 51, an accelerator operation amount Acc from an accelerator pedal position sensor 54 that detects the amount of operation of an accelerator pedal 53, a brake pedal position BP from a brake pedal position sensor 56 that detects the amount of depression of a brake pedal 55, a vehicle speed V from a vehicle speed sensor 58, etc. Besides, the electronic control unit 40 outputs various signals, including a control signal to the engine 22, a control signal to the CVT 28, a control signal to the starter motor 30, a control signal to the alternator 32, etc. Incidentally, the operation positions of the shift lever 51, that is, shift positions SP thereof, include the parking position (P position), the neutral position (N position), the drive position (D position), the reverse position (R position), etc.

The motor vehicle 20 of this embodiment constructed as described above carries out a so-called idling stop control in which if during stop of the vehicle an automatic stop condition is satisfied, the operation of the engine 22 is automatically stopped, and if during the automatic stop of the engine 22 an automatic start condition is satisfied, the engine 22 is automatically started. The automatic stop condition and the automatic start condition will be described later.

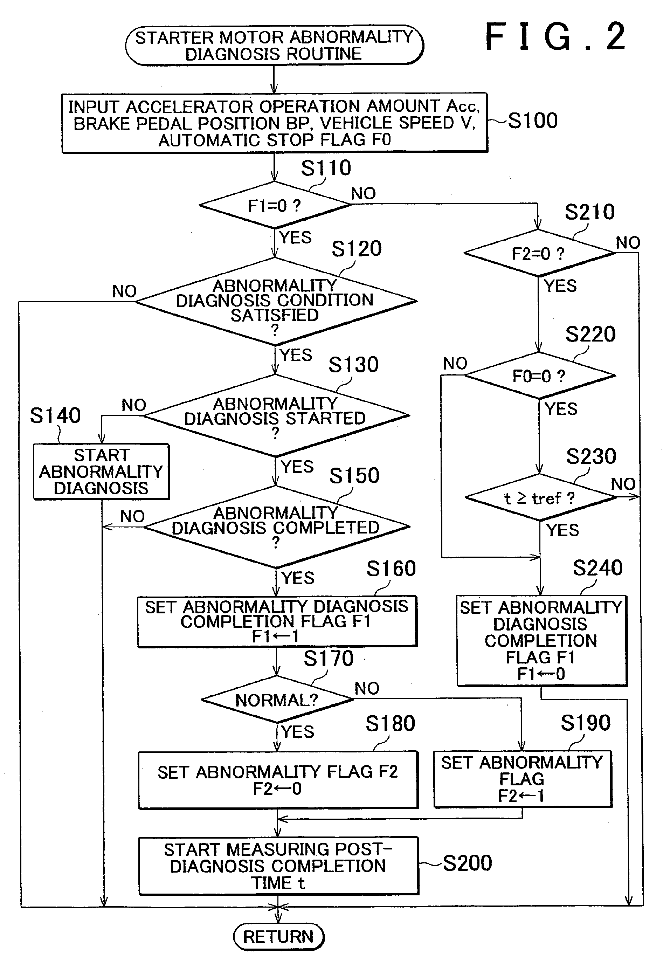

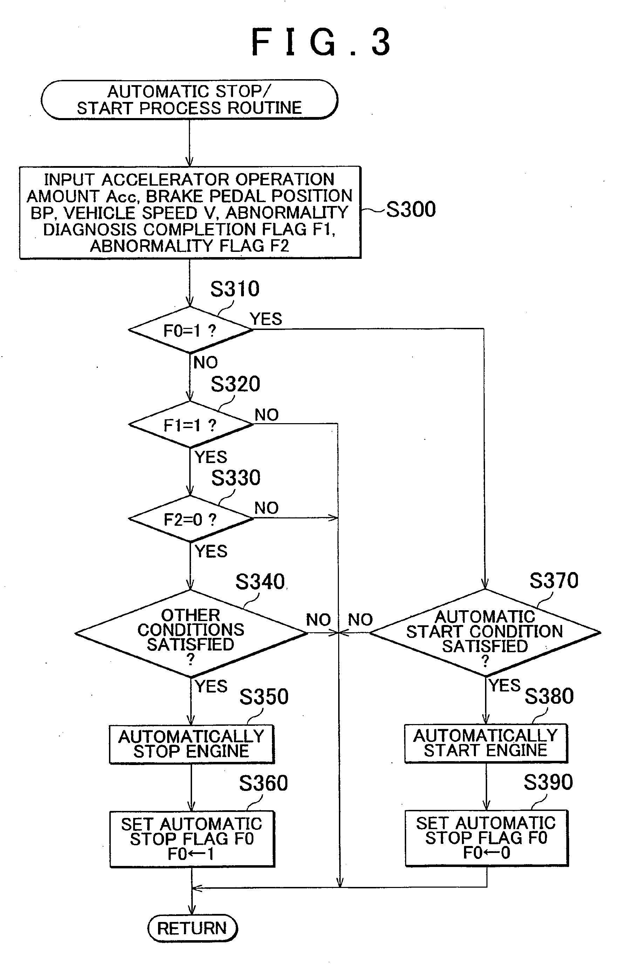

Next, operations of the motor vehicle 20 of the embodiment constructed as described above and, in particular, an operation thereof performed when the motor vehicle 20 comes to a stop from a state in which the motor vehicle 20 is moving and the idling stop control is carried out, will be described. FIG 2 is a flowchart showing an example of a starter motor abnormality diagnosis routine that is repeatedly executed by the electronic control unit 40 at every predetermined time. FIG 3 is a flowchart showing an example of an automatic stop/start process routine that is repeatedly executed by the electronic control unit 40 at every predetermined time. Hereinafter, the starter motor abnormality diagnosis routine of FIG 2 will first be described, and then the automatic stop/start process routine of FIG 3 will be described.

When the starter motor abnormality diagnosis routine is executed, the CPU 42 of the electronic control unit 40 firstly inputs data regarding, for example, the accelerator operation amount Acc from the accelerator pedal position sensor 54, the brake pedal position BP from the brake pedal position sensor 56, the vehicle speed V from the vehicle speed sensor 58, an automatic stop flag F0 that shows whether or not the engine 22 is in an automatically stopped state, etc. (step S100). Then, the CPU 42 checks the value of an abnormality diagnosis completion flag F1 that shows whether or not the abnormality diagnosis of the starter motor 30 has been completed (step S110). The automatic stop flag F0 is set, through an automatic stop/start process routine shown in FIG 3, to 1 when the engine 22 is in an automatically stopped state, and is set to 0 when the engine 22 is not in the automatically stopped state. The value of the automatic stop flag F0 is input to the CPU 42 by the CPU 42 reading the value thereof that has been written at a predetermined address of the RAM 46. Besides, the abnormality diagnosis completion flag F1 is set to 0 when the abnormality diagnosis of the starter motor 30 has not been completed, and is set to 1 when the abnormality diagnosis of the starter motor 30 is completed. Details of this flag will be described later.

When the value of the abnormality diagnosis completion flag F1 is 0, it is determined whether or not an abnormality diagnosis condition for performing an abnormality diagnosis of the starter motor 30 on the basis of the accelerator operation amount Acc, the brake pedal position BP, the vehicle speed V, etc., has been satisfied (step S120). The satisfaction of the abnormality diagnosis condition is determined in this embodiment when a stop of the vehicle is predicted on the basis of the accelerator operation amount Acc, the brake pedal position BP and the vehicle speed V. Concretely, in the case where the value of the accelerator operation amount Acc is 0, that is, the accelerator is off, and where the value of the brake pedal position BP is greater than 0, that is, the brake is on, and where the vehicle speed V is less than or equal to a predetermined vehicle speed Vref (e.g., 6 km/h, 8 km/h, etc.), the satisfaction of the abnormality diagnosis is determined since in that case, a stop of the vehicle can be predicted. When it is determined that the abnormality diagnosis condition is not satisfied, the starter motor abnormality diagnosis routine is immediately ended.

On the other hand, if it is determined that the abnormality diagnosis condition is satisfied, it is determined whether or not the abnormality diagnosis of the starter motor 30 has already been started (step S130). If the abnormality diagnosis has not started, the starting of the abnormality diagnosis of the starter motor 30 is commanded (step S140), and then this routine is ended. When the start of the abnormality diagnosis of the starter motor 30 is commanded, the electronic control unit 40 starts the abnormality diagnosis in parallel with the routine. Thus, in this embodiment, since the abnormality diagnosis of the starter motor 30 is performed when a stop of the vehicle is predicted. Therefore, the abnormality diagnosis of the starter motor 30 can be performed at an earlier timing than in the case where the abnormality diagnosis of the starter motor 30 is performed after the vehicle has stopped.

If in step S130 it is determined that the abnormality diagnosis of the starter motor 30 has already started, it is then determined whether or not the abnormality diagnosis has been completed (step S150). If it is determined that the abnormality diagnosis has not been completed, this routine is immediately ended. On the other hand, if in step S150 it is determined that the abnormality diagnosis has been completed, the abnormality diagnosis completion flag F1 is set to 1 (step S160), and the result of the abnormality diagnosis is checked (step S170). If it turns out that the starter motor 30 is normal, an abnormality flag F2 is set to 0 (step S180). If the starter motor 30 has abnormality, the abnormality flag F2 is set to 1 (step S190), and a timer (not shown) starts measuring a post-diagnosis completion time t that is a time elapsing from the completion of the abnormality diagnosis of the starter motor 30 (step S200). After that, this routine is ended.

When in step S110 it is determined that the abnormality diagnosis completion flag F1 is 1, that is, if the abnormality diagnosis of the starter motor 30 has been completed, the value of the abnormality flag F2 is checked (step S210). If the value of the abnormality flag F2 is 1, that is, if the starter motor 30 has abnormality, the routine is immediately ended in order to retain the information. Therefore, it is possible to retain the information that the starter motor 30 has abnormality, regardless of whether or not the post-diagnosis completion time t has become equal to or longer than a predetermined value tref described below.

On the other hand, when the value of the abnormality flag F2 is 0, that is, when the starter motor 30 is normal, the value of the automatic stop flag F0 is checked (step S220). If the value of the automatic stop flag F0 is 0, it is then determined whether or not the post-diagnosis completion time t has reached the predetermined value tref (step S230). The predetermined value tref may be an amount of time for which it is considered that the result of the abnormality diagnosis of the starter motor 30 may be retained, or the like. For example, the predetermined value tref may be several ten seconds, one minute, etc. The determination in each of steps S220 and S230 is performed to determine whether the value of the abnormality diagnosis completion flag F1 should be retained or reset to 0. If the value of the automatic stop flag F0 is 0 (the engine 22 has not been automatically stopped) and the post-diagnosis completion time t has not reached to the predetermined value tref, it is determined that the value of the abnormality diagnosis completion flag F1 may be retained, and this routine is immediately ended. On the other hand, if the value of the automatic stop flag F0 is 1 (the engine 22 has been automatically stopped), or if the post-diagnosis completion time t has reached the predetermined value tref, the abnormality diagnosis completion flag F1 is set to 0 (step S240), and then this routine is ended. After the abnormality diagnosis completion flag F1 has been set to 0 in this manner, the abnormality diagnosis of the starter motor 30 is performed if the abnormality diagnosis condition is satisfied during the next or later execution of this routine. As described above, the abnormality diagnosis completion flag F1 is set to 0 when the post-diagnosis completion time t reaches the predetermined value tref, and after that, the abnormality diagnosis of the starter motor 30 is performed again. Therefore, it is possible to avoid the event in which the result of the abnormality diagnosis of the starter motor 30 is retained for a relatively long time. Consequently, if abnormality occurs in the starter motor 30 at or after the elapse of a certain amount of time following the abnormality diagnosis of the starter motor 30, it is possible to avoid the event in which the abnormality is not detected and the engine 22 is automatically stopped.

Next, an operation at the time of carrying out the idling stop will be described. When the automatic stop/start process routine of FIG 3 is executed, the CPU 42 of the electronic control unit 40 inputs data regarding the accelerator operation amount Acc from the accelerator pedal position sensor 54, the brake pedal position BP from the brake pedal position sensor 56, the vehicle speed V from the vehicle speed sensor 58, the abnormality diagnosis completion flag F1, the abnormality flag F2, etc. (step S300), and checks the value of the automatic stop flag F0 (step S310).

Then, if the value of the automatic stop flag F0 is 0, that is, if the engine 22 has not been automatically stopped, it is determined whether or not the automatic stop condition for automatically stopping the engine 22 has been satisfied (steps S320 to S340). Herein, the satisfaction of the automatic stop condition is determined in this embodiment when the following conditions are all satisfied: a condition that the value of the abnormality diagnosis completion flag F1 is 1, that is, the abnormality diagnosis of the starter motor 30 has been completed (step S320); a condition that the value of the abnormality flag F2 is 0, that is, the starter motor 30 is normal (step S330); and other conditions based on the accelerator operation amount Acc, the brake pedal position BP, the vehicle speed V, etc. (step S340). Examples of the other conditions herein include a condition that the accelerator operation amount Acc is 0, that is, the accelerator is off, a condition that the brake pedal position BP is not 0, that is, the brake is on, a condition that the vehicle speed V is 0, that is, the vehicle is at a stop, a condition that the engine 22 is being idled, etc.

If it is determined that the automatic stop condition has not been satisfied, this routine is immediately ended. If it is determined that the automatic stop condition has been satisfied, the engine 22 is automatically stopped (step S350), and the automatic stop flag F0 is set to 1 (step S360), and then this routine is ended. Incidentally, if the value of the abnormality flag F2 is 1, that is, if the starter motor 30 has abnormality, the automatic stop condition is not satisfied, so that the engine 22 is not automatically stopped.

If in step S310 the value of the automatic stop flag F0 is 1, that is, the engine 22 has been automatically stopped, it is then determined whether or not an automatic start condition for automatically starting the engine 22 has been satisfied (step S370). If it is determined that the automatic start condition has not been satisfied, this routine is immediately ended. If it is determined that the automatic start condition has been satisfied, the engine 22 is automatically started by the starter motor 30 performing the cranking (step S380), and the automatic stop flag F0 is set to 0 (step S390), and then this routine is ended. Herein, the satisfaction of the automatic start condition is determined in this embodiment if at least one of the following conditions is satisfied: a condition that the value of the accelerator operation amount Acc is not 0, that is, the accelerator is on; a condition that the value of the brake pedal position BP is 0, that is, the brake is off; etc.

According to the above-described motor vehicle 20 of the embodiment, the abnormality diagnosis of the starter motor 30 is performed when the abnormality diagnosis of the starter motor 30 has not been completed and the abnormality diagnosis condition based on the accelerator operation amount Acc, the brake pedal position BP or the vehicle speed V has been satisfied. When the post-diagnosis completion time t as the amount of time following the completion of the abnormality diagnosis reaches the predetermined value tref, it is determined that the abnormality diagnosis of the starter motor 30 has not been completed. The engine 22 is automatically stopped when the automatic stop condition, including the condition that the abnormality diagnosis of the starter motor 30 has been completed and that the starter motor 30 is normal, has been satisfied. After that, when the automatic start condition has been satisfied, the automatic start of the engine 22 is performed by the starter motor 30 performing the cranking. Therefore, it is possible to avoid the event in which the result of the diagnosis that the starter motor 30 does not have abnormality is retained for a relatively long time. If abnormality occurs in the starter motor 30 at or after the elapse of a certain amount of time following the completion of the abnormality diagnosis of the starter motor 30, it is possible to avoid the event in which the abnormality is not detected and the engine 22 is automatically stopped.

Although in the motor vehicle 20 of the embodiment it is determined that the abnormality diagnosis condition has been satisfied when a stop of the vehicle is predicted, it may instead be determined that the abnormality diagnosis condition has been satisfied when the vehicle stops.

In the motor vehicle 20 of the embodiment, if the value of the abnormality flag F2 is 1, that is, if the starter motor 30 has abnormality, the value of the abnormality flag F2 is retained, and therefore the abnormality diagnosis completion flag F1 is not reset to 0, regardless of the post-diagnosis completion time t. However, the abnormality diagnosis completion flag F1 may be reset to 0 when the post-diagnosis completion time t becomes equal to or greater than the predetermined value tref.

In the motor vehicle 20 of the embodiment, after the abnormality diagnosis completion flag F1 is set to 1, the abnormality diagnosis completion flag F1 is set to 0 if the value of the automatic stop flag F0 is 1 (if the engine 22 has been automatically stopped) or if the post-diagnosis completion time t has reached the predetermined value tref. However, as long as the abnormality diagnosis completion flag F1 is set to 0 when the post-diagnosis completion time t reaches the predetermined value tref, the checking of the value of the automatic stop flag F0 may be omitted, that is, the process of step S220 may be omitted. Furthermore, the abnormality diagnosis completion flag F1 may also be set to 0 if, instead of or in addition to the checking of the value of the automatic stop flag F0, the vehicle speed V becomes equal to or greater than a predetermined vehicle speed Vref1 (a vehicle speed equal to the foregoing predetermined vehicle speed Vref that is used to determine whether or not a stop of the vehicle is predicted, or a vehicle speed that is slightly higher than the predetermined vehicle speed Vref).

In this embodiment, the engine 22 can be regarded as an "internal combustion engine". The starter motor 30 can be regarded as "cranking means". The electronic control unit 40 executing the process of steps S110 to S140 of the starter motor abnormality diagnosis routine of FIG. 2 in which the abnormality diagnosis of the starter motor 30 is executed if the abnormality diagnosis of the starter motor 30 has not been completed and the abnormality diagnosis condition based on the accelerator operation amount Acc, the brake pedal position BP or the vehicle speed V has been satisfied can be regarded as "abnormality diagnosis means". The electronic control unit 40 executing the process of steps S230 and S240 of the starter motor abnormality diagnosis routine of FIG 2 in which it is determined that the abnormality diagnosis of the starter motor 30 has not been completed provided that the post-diagnosis completion time t as the amount of time following the completion of the abnormality diagnosis of the starter motor 30 reaches the predetermined value tref can be regarded as "abnormality diagnosis incompleteness determination means". The electronic control unit 40 executing the automatic stop/start process routine of FIG. 3 in which the engine 22 is automatically stopped if the automatic stop condition, including the condition that the abnormality diagnosis of the starter motor 30 has been completed and that the starter motor 30 is normal, is satisfied, and the engine 22, after being automatically stopped, is automatically started by the starter motor 30 performing the cranking if the automatic start condition is satisfied can be regarded as "automatic stop/start means".

The "internal combustion engine" mentioned herein is not limited to an internal combustion engine that outputs power using a hydrocarbon-base fuel such as gasoline or light oil or the like, but may be any type of internal combustion engine, such as a hydrogen engine or the like. The "cranking means" is not limited to the starter motor 30, but may be any means for cranking an internal combustion engine. The "abnormality diagnosis means" is not limited to means that performs the abnormality diagnosis of the starter motor 30 if the abnormality diagnosis of the starter motor 30 has not been completed and the abnormality diagnosis condition based on the accelerator operation amount Acc, the brake pedal position BP or the vehicle speed V is satisfied. On the contrary, the "abnormality diagnosis means" may be any means for performing the abnormality diagnosis of the cranking means if the abnormality diagnosis condition, including the condition that the abnormality diagnosis of the cranking means has not been completed, is satisfied. The "automatic stop/start means" is not limited to the means which automatically stops the engine 22 if the automatic stop condition, including the condition that the abnormality diagnosis of the starter motor 30 has been completed and that the starter motor 30 is normal, is satisfied, and which, after the automatic stop of the engine 22, automatically starts the engine 22 by the starter motor 30 performing the cranking if the automatic start condition is satisfied. On the contrary, the "automatic stop/start means" may be any means for automatically stopping the internal combustion engine provided that a predetermined automatic stop condition, including the condition that the abnormality diagnosis of the cranking means by the abnormality diagnosis means has been completed and that it has been diagnosed that the cranking means does not have abnormality, is satisfied, and for automatically starting the internal combustion engine by the cranking means performing the cranking after the engine has been automatically stopped, provided that a predetermined automatic start condition is satisfied.

While the best mode for carrying out the invention has been described with reference to the embodiment, it should be apparent that the invention is not limited at all to the foregoing or other embodiments, but can be carried out in various forms within the scope of the claims.

This invention is applicable to the manufacture of vehicles, and the like. If the abnormality diagnosis of a starter motor has not been completed and an abnormality diagnosis condition is satisfied, the abnormality diagnosis is performed (S110 to S140). After the abnormality diagnosis, it is determined that the abnormality diagnosis has not been completed if a post-diagnosis completion time t reaches a predetermined value tref (S230, S240). Then, if an automatic stop condition, including a condition that the abnormality diagnosis has been completed and the starter motor is normal, is satisfied, the engine is automatically stopped. Therefore, it is possible to avoid an event in which a result of the abnormality diagnosis of the starter motor is retained for a relatively long time, and to avoid an event in which if an abnormality occurs in the starter motor at or after the elapse of a certain amount of time following the completion of the abnormality diagnosis, the abnormality is not detected and the engine is automatically stopped.

## Claims

1. A vehicle that moves using power from an internal combustion engine, comprising:
cranking means (30) for cranking the internal combustion engine;
abnormality diagnosis means (40); and
automatic stop/start means (40)
**characterized in that**
the abnormality diagnosis means (40) performs an abnormality diagnosis of the cranking means if a predetermined abnormality diagnosis condition, including a condition that the abnormality diagnosis of the cranking means has not been completed, is satisfied;
abnormality diagnosis incompleteness determination means (40) determines that the abnormality diagnosis of the cranking means by the abnormality diagnosis means has not been completed even if completion of the abnormality diagnosis of the cranking means has occurred provided that a predetermined time has elapsed following the completion of the abnormality diagnosis of the cranking means; and
the automatic stop/start means (40) automatically stops the internal combustion engine if a predetermined automatic stop condition, including a condition that the abnormality diagnosis of the cranking means by the abnormality diagnosis means has been completed and that it has been diagnosed that the cranking means does not have abnormality, is satisfied, and automatically starts the internal combustion engine in an automatically stopped state with the cranking means performing cranking if a predetermined automatic start condition is satisfied.

2. The vehicle according to claim 1, wherein
the abnormality diagnosis incompleteness determination means (40) determines that the abnormality diagnosis of the cranking means has not been completed also when the internal combustion engine has automatically stopped.

3. The vehicle according to claim 1 or 2, wherein
the abnormality diagnosis incompleteness determination means (40) determines that the abnormality diagnosis of the cranking means has been completed despite elapse of the predetermined time following the completion of the abnormality diagnosis provided that it is determined by the abnormality diagnosis means that the cranking means has abnormality.

4. The vehicle according to any one of claims 1 to 3, wherein
the predetermined abnormality diagnosis condition includes a condition that a stop of the vehicle is predicted.

5. The vehicle according to any one of claims 1 to 3, wherein
the predetermined abnormality diagnosis condition includes a condition that the vehicle is in a stopped state.

6. A vehicle that moves using power from an internal combustion engine, comprising:
cranking means (30) for cranking the internal combustion engine;
abnormality diagnosis means (40); and
automatic stop/start means (40)
**characterized in that**
the abnormality diagnosis means (40) performs an abnormality diagnosis of the cranking means if a predetermined abnormality diagnosis condition, including a condition that the abnormality diagnosis of the cranking means has not been completed, is satisfied, and resets a result of the abnormality diagnosis of the cranking means by the abnormality diagnosis means if a predetermined time elapses following completion of the abnormality diagnosis of the cranking means; and
the automatic stop/start means (40) automatically stops the internal combustion engine if a predetermined automatic stop condition, including a condition that the abnormality diagnosis of the cranking means by the abnormality diagnosis means has been completed and that it has been diagnosed that the cranking means does not have abnormality, is satisfied, and automatically starts the internal combustion engine in an automatically stopped state with the cranking means performing cranking if a predetermined automatic start condition is satisfied.

7. The vehicle according to claim 6, wherein
the abnormality diagnosis means (40) does not reset the result of the abnormality diagnosis even if the predetermined time has elapsed provided that it is determined that the cranking means is abnormal.

8. A vehicle that moves using power from an internal combustion engine, comprising:
cranking means (30) for cranking the internal combustion engine; abnormality diagnosis means (40); and
automatic stop/start means (40)
**characterized in that**
the abnormality diagnosis means (40) for performs an abnormality diagnosis of the cranking means if a predetermined abnormality diagnosis condition, including a condition that the abnormality diagnosis of the cranking means has not been completed, is satisfied, and performs the abnormality diagnosis of the cranking means again if a predetermined time elapses following completion of the abnormality diagnosis of the cranking means; and
the automatic stop/start means (40) automatically stops the internal combustion engine if a predetermined automatic stop condition, including a condition that the abnormality diagnosis of the cranking means by the abnormality diagnosis means has been completed and that it has been diagnosed that the cranking means does not have abnormality, is satisfied, and automatically starts the internal combustion engine in an automatically stopped state with the cranking means performing cranking if a predetermined automatic start condition is satisfied.

9. The vehicle according to any one of claims 1 to 8, wherein
the abnormality diagnosis means (40) performs the abnormality diagnosis of the cranking means before it is determined whether or not the internal combustion engine is to be automatically stopped by the automatic stop/start means.

10. A control method for a vehicle that includes an internal combustion engine (22) that outputs power for moving the vehicle, and cranking means (30) for cranking the internal combustion engine, **characterized by** comprising the steps of:
performing an abnormality diagnosis of the cranking means if a predetermined abnormality diagnosis condition, including a condition that the abnormality diagnosis of the cranking means has not been completed, is satisfied, and determining that the abnormality diagnosis of the cranking means has not been completed if a predetermined time has elapsed following completion of the abnormality diagnosis of the cranking means; and
automatically stopping the internal combustion engine if a predetermined automatic stop condition, including a condition that the abnormality diagnosis of the cranking means by the abnormality diagnosis means has been completed and that it has been diagnosed that the cranking means does not have abnormality, is satisfied, and automatically starting the internal combustion engine in an automatically stopped state with the cranking means performing cranking if a predetermined automatic start condition is satisfied.

## Patentansprüche

1. Fahrzeug, das sich unter Verwendung einer Leistung von einer Brennkraftmaschine bewegt, das folgendes aufweist:
eine Anlasseinrichtung (30) zum Anlassen der Brennkraftmaschine;
eine Abnormalitätsdiagnoseeinrichtung (40); und
eine automatische Stopp/Starteinrichtung (40)
**dadurch gekennzeichnet, dass**
die Abnormalitätsdiagnoseeinrichtung (40) eine Abnormalitätsdiagnose der Anlasseinrichtung ausführt, wenn eine vorbestimmte Abnormalitätsdiagnosebedingung einschließlich einer Bedingung, dass die Abnormalitätsdiagnose der Anlasseinrichtung nicht abgeschlossen wurde, erfüllt ist;
eine Abnormalitätsdiagnoseunvollständigkeitsbestimmungseinrichtung (40) bestimmt, dass die Abnormalitätsdiagnose der Anlasseinrichtung durch die Abnormalitätsdiagnoseeinrichtung nicht abgeschlossen wurde, selbst wenn ein Abschluss der Abnormalitätsdiagnose der Anlasseinrichtung aufgetreten ist, vorausgesetzt, dass eine vorbestimmte Zeit verstrichen ist, die dem Abschluss der Abnormalitätsdiagnose der Anlasseinrichtung nachfolgt; und
die automatische Stopp/Starteinrichtung (40) automatisch die Brennkraftmaschine stoppt, wenn eine vorbestimmte automatische Stoppbedingung einschließlich einer Bedingung, dass die Abnormalitätsdiagnose der Anlasseinrichtung durch die Abnormalitätsdiagnoseeinrichtung abgeschlossen wurde und dass diagnostiziert wurde, dass die Anlasseinrichtung keine Abnormalität aufweist, erfüllt ist, und automatisch die Brennkraftmaschine in einem automatisch gestoppten Zustand mit der Anlasseinrichtung startet, die ein Anlassen durchführt, wenn eine vorbestimmte automatische Startbedingung erfüllt ist.

2. Fahrzeug nach Anspruch 1, wobei
die Abnormalitätsdiagnoseunvollständigkeitsbestimmungseinrichtung (40) bestimmt, dass die Abnormalitätsdiagnose der Anlasseinrichtung nicht abgeschlossen wurde, auch wenn die Brennkraftmaschine automatisch gestoppt wurde.

3. Fahrzeug nach Anspruch 1 oder 2, wobei
die Abnormalitätsdiagnoseunvollständigkeitsbestimmungseinrichtung (40) bestimmt, dass die Abnormalitätsdiagnose der Anlasseinrichtung abgeschlossen wurde trotz eines Verstreichens der vorbestimmten Zeit, die dem Abschluss der Abnormalitätsdiagnose nachfolgt, vorausgesetzt, dass durch die Abnormalitätsdiagnoseeinrichtung bestimmt ist, dass die Anlasseinrichtung eine Abnormalität aufweist.

4. Fahrzeug nach einem der Ansprüche 1 bis 3, wobei
die vorbestimmte Abnormalitätsdiagnosebedingung eine Bedingung einschließt, dass ein Stopp des Fahrzeugs prognostiziert ist.

5. Fahrzeug nach einem der Ansprüche 1 bis 3, wobei
die vorbestimmte Abnormalitätsdiagnosebedingung eine Bedingung einschließt, dass das Fahrzeug in einem gestoppten Zustand ist.

6. Fahrzeug, das sich unter Verwendung einer Leistung von einer Brennkraftmaschine bewegt, das folgendes aufweist:
eine Anlasseinrichtung (30) zum Anlassen der Brennkraftmaschine;
eine Abnormalitätsdiagnoseeinrichtung (40); und
eine automatische Stopp/Starteinrichtung (40)
**dadurch gekennzeichnet, dass**
die Abnormalitätsdiagnoseeinrichtung (40) eine Abnormalitätsdiagnose der Anlasseinrichtung durchführt, wenn eine vorbestimmte Abnormalitätsdiagnosebedingung einschließlich einer Bedingung, dass die Abnormalitätsdiagnose der Anlasseinrichtung nicht abgeschlossen wurde, erfüllt ist, und ein Ergebnis der Abnormalitätsdiagnose der Anlasseinrichtung durch die Abnormalitätsdiagnoseeinrichtung zurückgesetzt wird, wenn eine vorbestimmte Zeit verstreicht, die einem Abschluss der Abnormalitätsdiagnose der Anlasseinrichtung nachfolgt; und
die automatische Stopp/Starteinrichtung (40) automatisch die Brennkraftmaschine stoppt, wenn eine vorbestimmte automatische Stoppbedingung einschließlich einer Bedingung, dass die Abnormalitätsdiagnose der Anlasseinrichtung durch die Abnormalitätsdiagnoseeinrichtung abgeschlossen wurde und dass diagnostiziert wurde, dass die Anlasseinrichtung keine Abnormalität aufweist, erfüllt ist, und die Brennkraftmaschine in einem automatisch gestoppten Zustand mit der Anlasseinrichtung automatisch startet, die ein Anlassen durchführt, wenn eine vorbestimmte automatische Startbedingung erfüllt ist.

7. Fahrzeug nach Anspruch 6, wobei
die Abnormalitätsdiagnoseeinrichtung (40) nicht das Ergebnis der Abnormalitätsdiagnose zurücksetzt, selbst wenn die vorbestimmte Zeit verstrichen ist, vorausgesetzt, dass bestimmt ist, dass die Anlasseinrichtung abnormal ist.

8. Fahrzeug, das sich unter Verwendung einer Leistung von einer Brennkraftmaschine bewegt, das folgendes aufweist:
eine Anlasseinrichtung (30) zum Anlassen der Brennkraftmaschine; eine Abnormalitätsdiagnoseeinrichtung (40); und eine automatische Stopp/Starteinrichtung (40)
**dadurch gekennzeichnet, dass**
die Abnormalitätsdiagnoseeinrichtung (40) eine Abnormalitätsdiagnose der Anlasseinrichtung durchführt, wenn eine vorbestimmte Abnormalitätsdiagnosebedingung einschließlich einer Bedingung, dass die Abnormalitätsdiagnose der Anlasseinrichtung nicht abgeschlossen wurde, erfüllt ist, und die Abnormalitätsdiagnose der Anlasseinrichtung erneut durchführt, wenn eine vorbestimmte Zeit verstreicht, die einem Abschluss der Abnormalitätsdiagnose der Anlasseinrichtung nachfolgt; und
die automatische Stopp/Starteinrichtung (40) automatisch die Brennkraftmaschine stoppt, wenn eine vorbestimmte automatische Stoppbestimmung einschließlich einer Bedingung, dass die Abnormalitätsdiagnose der Anlasseinrichtung durch die Abnormalitätsdiagnoseeinrichtung abgeschlossen wurde und dass diagnostiziert wurde, dass die Anlasseinrichtung keine Abnormalität aufweist, erfüllt ist, und die Brennkraftmaschine in einem automatisch gestoppten Zustand mit der Anlasseinrichtung automatisch startet, die ein Anlassen durchführt, wenn eine vorbestimmte automatische Startbedingung erfüllt ist.

9. Fahrzeug nach einem der Ansprüche 1 bis 8, wobei
die Abnormalitätsdiagnoseeinrichtung (40) die Abnormalitätsdiagnose der Anlasseinrichtung durchführt, bevor bestimmt ist, ob die Brennkraftmaschine durch die automatische Stopp/Starteinrichtung automatisch gestoppt werden soll oder nicht.

10. Steuerverfahren für ein Fahrzeug, das eine Brennkraftmaschine (22), die eine Leistung zum Bewegen des Fahrzeugs ausgibt, und eine Anlasseinrichtung (30) zum Anlassen der Brennkraftmaschine aufweist, **gekennzeichnet durch** die folgenden Schritte:
Durchführen einer Abnormalitätsdiagnose der Anlasseinrichtung, wenn eine vorbestimmte Abnormalitätsdiagnosebedingung einschließlich einer Bedingung, dass die Abnormalitätsdiagnose der Anlasseinrichtung nicht abgeschlossen wurde, erfüllt ist, und
Bestimmen, dass die Abnormalitätsdiagnose der Anlasseinrichtung nicht abgeschlossen wurde, wenn eine vorbestimmte Zeit verstrichen ist, die einem Abschluss der Abnormalitätsdiagnose der Anlasseinrichtung nachfolgt; und
automatisches Stoppen der Brennkraftmaschine, wenn eine vorbestimmte automatische Stoppbedingung einschließlich einer Bedingung, dass die Abnormalitätsdiagnose der Anlasseinrichtung **durch** die Abnormalitätsdiagnoseeinrichtung abgeschlossen wurde und dass diagnostiziert wurde, dass die Anlasseinrichtung keine Abnormalität aufweist, erfüllt ist, und automatisches Starten der Brennkraftmaschine in einem automatisch gestoppten Zustand mit der Anlasseinrichtung, die ein Anlassen durchführt, wenn eine vorbestimmte automatische Startbedingung erfüllt ist.

## Revendications

1. Véhicule qui se déplace en utilisant de la puissance provenant d'un moteur à combustion interne, comportant :
des moyens de démarrage (30) destinés à démarrer le moteur à combustion interne ;
des moyens de diagnostic d'anomalie (40) ; et
des moyens arrêt/marche automatiques (40)
**caractérisé en ce que**
les moyens de diagnostic d'anomalie (40) réalisent un diagnostic d'anomalie des moyens de démarrage si une condition prédéterminée de diagnostic d'anomalie, comprenant une condition selon laquelle le diagnostic d'anomalie des moyens de démarrage n'est pas terminé, est satisfaite ;
des moyens de détermination de non-achèvement de diagnostic d'anomalie (40) déterminent que le diagnostic d'anomalie des moyens de démarrage par les moyens de diagnostic d'anomalie n'est pas terminé même si un achèvement du diagnostic d'anomalie des moyens de démarrage s'est produit pourvu qu'un temps prédéterminé se soit écoulé à la suite de l'achèvement du diagnostic d'anomalie des moyens de démarrage ; et
les moyens arrêt/marche automatiques (40) arrêtent automatiquement le moteur à combustion interne si une condition d'arrêt automatique prédéterminée, comprenant une condition selon laquelle le diagnostic d'anomalie des moyens de démarrage par les moyens de diagnostic d'anomalie est terminé et il a été diagnostiqué que les moyens de démarrage ne présentent pas d'anomalie, est satisfaite, et mettent en marche automatiquement le moteur à combustion interne dans une condition d'arrêt automatique avec les moyens de démarrage qui réalisent un démarrage si une condition de démarrage automatique prédéterminée est satisfaite.

2. Véhicule selon la revendication 1, dans lequel
les moyens de détermination de non achèvement de diagnostic d'anomalie (40) déterminent que le diagnostic d'anomalie des moyens de démarrage n'est pas terminé également quand le moteur à combustion interne s'est automatiquement arrêté.

3. Véhicule selon la revendication 1 ou 2, dans lequel
les moyens de détermination de non achèvement de diagnostic d'anomalie (40) déterminent que le diagnostic d'anomalie des moyens de démarrage est terminé en dépit de l'écoulement du temps prédéterminé suivant l'achèvement du diagnostic d'anomalie pourvu qu'il soit déterminé par les moyens de diagnostic d'anomalie que les moyens de démarrage présentent une anomalie.

4. Véhicule selon l'une quelconque des revendications 1 à 3, dans lequel
la condition prédéterminée de diagnostic d'anomalie comprend une condition telle qu'un arrêt du véhicule est prévu.

5. Véhicule selon l'une quelconque des revendications 1 à 3, dans lequel
la condition prédéterminée de diagnostic d'anomalie comprend une condition telle que le véhicule est dans un état arrêté.

6. Véhicule qui se déplace en utilisant de la puissance provenant d'un moteur à combustion interne, comportant :
des moyens de démarrage (30) destinés à démarrer le moteur à combustion interne ;
des moyens de diagnostic d'anomalie (40) ; et
des moyens arrêt/marche automatiques (40)
**caractérisé en ce que**
les moyens de diagnostic d'anomalie (40) réalisent un diagnostic d'anomalie des moyens de démarrage si une condition prédéterminée de diagnostic d'anomalie, comprenant une condition selon laquelle le diagnostic d'anomalie des moyens de démarrage n'est pas terminé, est satisfaite, et réinitialisent un résultat du diagnostic d'anomalie des moyens de démarrage si un temps prédéterminé s'écoule à la suite de l'achèvement du diagnostic d'anomalie des moyens de démarrage ;
les moyens arrêt/marche automatiques (40) arrêtent automatiquement le moteur à combustion interne si une condition d'arrêt automatique prédéterminée, comprenant une condition selon laquelle le diagnostic d'anomalie des moyens de démarrage par les moyens de diagnostic d'anomalie est terminé et il a été diagnostiqué que les moyens de démarrage ne présentent pas d'anomalie, est satisfaite, et mettent en marche automatiquement le moteur à combustion interne dans une condition d'arrêt automatique avec les moyens de démarrage qui réalisent un démarrage si une condition de démarrage automatique prédéterminée est satisfaite.

7. Véhicule selon la revendication 6, dans lequel
les moyens de diagnostic d'anomalie (40) ne remettent pas à zéro le résultat du diagnostic d'anomalie même si le temps prédéterminé s'est écoulé à condition que l'on détermine que les moyens de démarrage présentent une anomalie.

8. Véhicule qui se déplace en utilisant de la puissance provenant d'un moteur à combustion interne, comportant :
des moyens de démarrage (30) destinés à démarrer le moteur à combustion interne ; des moyens de diagnostic d'anomalie (40) ; et
des moyens arrêt/marche automatiques (40)
**caractérisé en ce que**
les moyens de diagnostic d'anomalie (40) réalisent un diagnostic d'anomalie des moyens de démarrage si une condition prédéterminée de diagnostic d'anomalie, comprenant une condition selon laquelle le diagnostic d'anomalie des moyens de démarrage n'est pas terminé, est satisfaite, et réalisent de nouveau le diagnostic d'anomalie des moyens de démarrage si un temps prédéterminé s'écoule à la suite de l'achèvement du diagnostic d'anomalie des moyens de démarrage ; et
les moyens arrêt/marche automatiques (40) arrêtent automatiquement le moteur à combustion interne si une condition d'arrêt automatique prédéterminée, comprenant une condition selon laquelle le diagnostic d'anomalie des moyens de démarrage par les moyens de diagnostic d'anomalie est terminé et il a été diagnostiqué que les moyens de démarrage ne présentent pas d'anomalie, est satisfaite, et mettent en marche automatiquement le moteur à combustion interne dans une condition d'arrêt automatique avec les moyens de démarrage qui réalisent un démarrage si une condition de démarrage automatique prédéterminée est satisfaite.

9. Véhicule selon l'une quelconque des revendications 1 à 8, dans lequel
les moyens de diagnostic d'anomalie (40) réalisent le diagnostic d'anomalie des moyens de démarrage avant que l'on détermine si le moteur à combustion interne doit être automatiquement arrêté ou non par les moyens arrêt/marche automatiques.

10. Procédé de commande pour un véhicule qui comprend un moteur à combustion interne (22) qui délivre de la puissance pour déplacer le véhicule, et des moyens de démarrage (30) destinés à démarrer le moteur à combustion interne, **caractérisé en ce qu'**il comporte les étapes consistant à :
réaliser un diagnostic d'anomalie des moyens de démarrage si une condition prédéterminée de diagnostic d'anomalie, comprenant une condition selon laquelle le diagnostic d'anomalie des moyens de démarrage n'est pas terminé, est satisfaite, et déterminer que le diagnostic d'anomalie des moyens de démarrage n'est pas terminé si un temps prédéterminé s'est écoulé à la suite de l'achèvement du diagnostic d'anomalie des moyens de démarrage ; et
arrêter automatiquement le moteur à combustion interne si une condition d'arrêt automatique prédéterminée, comprenant une condition selon laquelle le diagnostic d'anomalie des moyens de démarrage par les moyens de diagnostic d'anomalie est terminé et il a été diagnostiqué que les moyens de démarrage ne présentent pas d'anomalie, est satisfaite, et mettre automatiquement en marche le moteur à combustion interne dans un état d'arrêt automatique avec les moyens de démarrage qui réalisent un démarrage si une condition de démarrage automatique prédéterminée est satisfaite.
